Europäisches Patentamt

European Patent Office

Office européen des brevets

(11) Veröffentlichungsnummer: **0 346 512**
**A1**

## EUROPÄISCHE PATENTANMELDUNG

(21) Anmeldenummer: 88109551.7

(22) Anmeldetag: 15.06.88

(51) Int. Cl.⁴: **B32B 7/12 , B32B 15/08 ,**
**C08J 5/12**

(43) Veröffentlichungstag der Anmeldung:
**20.12.89 Patentblatt 89/51**

(84) Benannte Vertragsstaaten:
**AT BE CH DE ES FR GB GR IT LI LU NL SE**

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) Verfahren und Anlage zum Kaschieren von Metallblechen mit Folien.

(57) Bei einem Verfahren und einer Anlage zum Kaschieren von Metallblechen mit Folien, insbesondere
Folien aus thermoplastischen, hochpolymeren Werkstoffen, wird eine Schicht aus einem Schmelzkleber
auf der Basis von Polyurethan auf eine Oberfläche
der Folie aufgebracht, so daß die beschichtete Folie
und das Metallblech durch Kaschierwalzen miteinander verbunden werden können.

FIG. 2

EP 0 346 512 A1

## Verfahren und Anlage zum Kaschieren von Metallblechen mit Folien

Die Erfindung betrifft ein Verfahren und eine Anlage zum Kaschieren von Metallblechen mit Folien, insbesondere mit Folien aus thermoplastischen, hochpolymeren Werkstoffen.

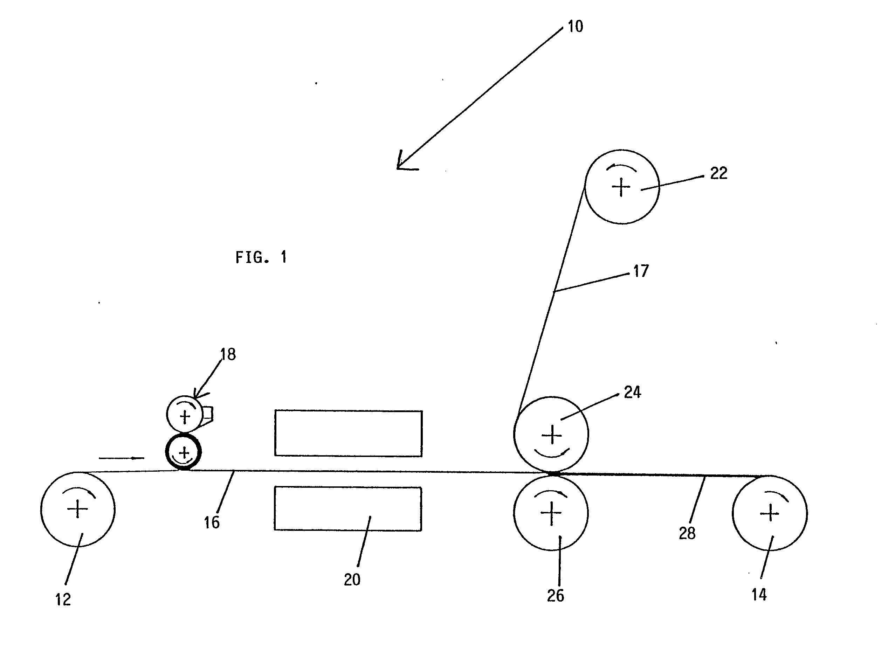

Beim sogenannten "Coil Coating" werden Stahl- oder Aluminium-Bleche mit einer Breite von 1 200 mm mittels Lösungsmittelklebern mit PVC-Folie kaschiert. Der Grundaufbau einer entsprechenden Anlage soll unter Bezugnahme auf Figur 1 der Zeichnungen näher erläutert werden, die schematisch die verschiedenen Stationen darstellt.

Die allgemein durch das Bezugszeichen 10 angedeutete Anlage weist eine in Richtung des Pfeils drehbare Abwickelspule 12 für das zu beschichtende Metallblech 16 auf, das auf eine ebenfalls in Richtung des Pfeils drehbare Aufwickelspule 14 aufgewickelt wird.

An dem Transportweg des Metallbleches von der Abwickelspule 12 zur Aufwickelspule 14 ist zunächst eine Auftragstation 18 vorgesehen, mit der ein Lösungsmittelkleber auf eine Oberfläche des Metallbleches 16 aufgebracht wird. Anschließend durchläuft das mit dem Lösungsmittelkleber versehene Metallblech 16 eine Heizvorrichtung 20, in der es auf 375° C erwärmt wird, so daß der Lösungsmittelanteil des Lösungsmittelklebers abdampfen kann.

In den Spalt zwischen zwei in Richtung der Pfeile drehbaren Kaschierwalzen 24, 26 werden das mit dem Klebstoff versehene Metallblech 16 einerseits und eine PVC-Folie 17 andererseits eingeführt, die von einer Spule 22 abgewickelt wird.

In dem Spalt zwischen den beiden Kaschierwalzen 24, 26 herrscht eine Temperatur von etwa 200° C, so daß das Metallblech 16 und die PVC-Folie 17 miteinander verbunden werden. Das entstehende, kaschierte Metallblech 28 wird dann auf die Spule 14 aufgewickelt.

Nachteilig bei diesem herkömmlichen Kaschierverfahren ist zunächst die erforderliche Verwendung eines lösungsmittelhaltigen Klebers mit nur etwa 25 % Festkörpergehalt, d.h., bei der Erwärmung in der Heizvorrichtung 20 werden etwa 75 % des Lösungsmittelklebers, nämlich das Lösungsmittel, frei. Aufgrund der modernen Umweltschutzbestimmungen muß das gesamte abgegebene Lösungsmittel abgefangen und zuverlässig verhindert werden, daß es nach außen dringen kann.

Außerdem müssen zusätzliche Maßnahmen vorgenommen werden, um die Brennbarkeit der beschichteten Metallbleche zu reduzieren. Denn beim Verbrennen des in den Folien enthaltenen Polyvinylchlorid entsteht Salzsäure, die bei einem Brand, insbesondere an elektronischen Einrichtungen, Schäden in Millionenhöhe verursachen kann.

Deshalb wird seit Jahren nach Folien gesucht, die bei der Verbrennung keine Chloride abspalten, wie bspw. ABS, Papier, Polyethylen, Polypropylen o.ä. hochpolymere Werkstoffe. Die bisher üblichen, lösungsmittelhaltigen Klebstoffe lassen jedoch die Verwendung solcher Folien nicht zu.

Und schließlich können die vorhandenen Anlagen nur mit einer Geschwindigkeit von etwa 25 bis 25 m/min. arbeiten, da bei höheren Geschwindigkeiten das erforderliche, vollständige Abdampfen des Lösungsmittels aus dem Klebstoff nicht gewährleistet ist.

Der Erfindung liegt deshalb die Aufgabe zugrunde, ein Verfahren und eine Anlage zum Kaschieren von Metallblechen mit Folien, insbesondere mit Folien aus thermoplastischen, hochpolymeren Werkstoffen, der angegebenen Gattungen zu schaffen, bei denen die oben erwähnten Nachteile nicht auftreten.

Insbesondere sollen ein Verfahren und eine Anlage vorgeschlagen werden, die mit höheren Geschwindigkeiten von mindestens 50 m/min. arbeiten können.

Dies wird erfindungsgemäß durch die in den kennzeichnenden Teilen der Ansprüche 1 bzw. 6 angegebenen Merkmale erreicht.

Zweckmäßige Ausführungsformen werden durch die entsprechenden Unteransprüche definiert.

Die mit der Erfindung erzielten Vorteile beruhen auf der Verwendung eines bestimmten Schmelzklebers, nämlich eines Schmelzklebers auf der Basis von Polyurethan (PUR), der zu einer ausgezeichneten Haftung zwischen dem Metallblech und der Folie führt. Dieser Schmelzkleber enthält keine Lösungsmittel, so daß die oben angesprochenen Probleme mit der Abdampfung des Lösungsmittels entfallen. Gleichzeitig ergibt sich eine relevante Energieersparnis, da mit einer Kaschiertemperatur von 50 bis 60° C gearbeitet werden kann; dies muß verglichen werden mit dem bisher üblichen Aufheizen der Metallbleche auf 375° C und das Kaschieren bei etwa 200° C.

Aufgrund der großen, zu verdampfenden Lösungsmittel-Mengen bei den bisher üblichen Lösungsmittelklebern mit einem Festkörperanteil von nur etwa 25 % ergibt sich in Bezug auf den Klebstoffpreis kein relevanter Unterschied; auch das Auftragsgewicht ändert sich praktisch nicht.

Da bei Verwendung von Schmelzklebern oder "Hot Melts" auf der Basis von PUR kein Lösungsmittel abgedampft werden muß, läßt sich im Vergleich mit den bisher üblichen Anlagen die Verabeitungsgeschwindigkeit zumindest verdoppeln, so daß Geschwindigkeiten von 50 bis 70 m/min erreichbar werden.

Aus Gründen des Umweltschutzes werden in nahezu allen Ländern in Zukunft Lösungsmittelklebstoffe verboten, da sich eine Verunreinigung der Atmosphäre durch die abgedampften Lösungsmittel nicht mit der gewünschten Sicherheit ausschließen läßt. Schmelzklebstoffe auf der Basis von Polyurethan bilden insoweit keine Probleme, da sie vollständig, also ohne jede Abdampfung, verarbeitet werden können.

Auch in Bezug auf die Verarbeitung von Schmelzklebstoffen ergeben sich keine Schwierigkeiten, da bspw. bei Verwendung von Breitschlitzdüsen auch nach längeren Stillstandszeiten weitergearbeitet werden kann, ohne daß größere Reinigungsarbeiten an dem Auftragskopf durchgeführt werden müssen.

Und schließlich kann auch die bisher übliche, zusätzliche Heizvorrichtung entfallen; denn wegen der oben angegebenen, relativ geringen Kaschiertemperaturen von 50° C bis 60° C genügt in vielen Fällen die entsprechende, relativ geringfügige Erwärmung der Kaschierwalzen selbst, z. B. durch aufgesprühten Wasserdampf, um die Einhaltung dieser Kaschiertemperaturen zu gewährleisten.

Obwohl nach einer bevorzugten Ausführungsform der PUR-Schmelzkleber mit einer Breitstützdüse aufgebracht wird, können auch andere Auftragtechniken eingesetzt werden, insbesondere ein Walzenauftrag.

Der PUR-Schmelzkleber muß mit Wasser bzw. Wasserdampf in Berührung gebracht werden, damit er ausreagiert. Wenn hierzu die Luftfeuchtigkeit nicht ausreicht, muß zusätzlich Wasserdampf aufgesprüht werden; hierzu stehen verschiedene Möglichkeiten zur Verfügung, und zwar bspw. das Besprühen des Metallbleches; nach einer bevorzugten Ausführungsform wird jedoch, auch wegen der besseren Haftung, die Folie mit Wasserdampf besprüht, und zwar zweckmäßigerweise vor dem Auftragen des PUR-Schmelzklebers.

Für besonders kritische Anwendungsfälle können auch sowohl die Folie als auch das Metallblech mit Wasserdampf besprüht werden. Schließlich besteht auch noch die Möglichkeit, die auf die Folie aufgebrachte Schicht aus dem PUR-Klebstoff mit Wasserdampf zu besprühen.

Obwohl im Prinzip der PUR-Schmelzklebstoff auch auf das Metallblech aufgebracht werden kann, erfolgt nach einer bevorzugten Ausführungsform der Auftrag auf die Folie, insbesondere auch unter Berücksichtigung der besseren Haftung PVC-Folie/PUR-Schmelzklebstoff.

Und schließlich lassen sich in Verbindung mit PUR-Schmelzklebstoffen auch Folien aus anderen Materialien verwenden, wie bspw. ABS, Papier, Polyethylen, Polypropylen o.ä. hochpolymere Werkstoffen, die bei der Verbrennung keine Chloride abspalten und damit das oben angedeutete Brandrisiko wesentlich verringern.

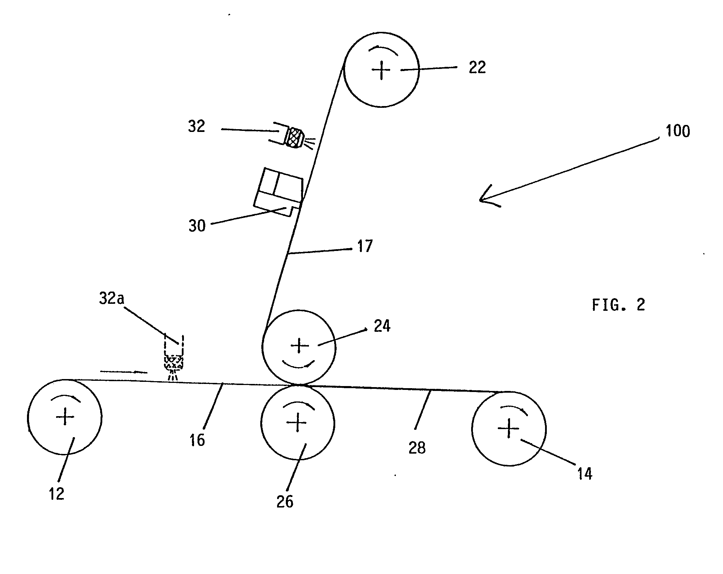

Die Erfindung wird im folgenden anhand von Ausführungsbeispielen unter Bezugnahme auf die beiliegende Zeichnung näher erläutert, deren Figur 2 eine schematische Darstellung einer Anlage zum Kaschieren von Metallblechen mit einer PVC-Folie zeigt.

Die allgemein durch das Bezugzeichen 100 angedeutete Anlage hat im Prinzip den gleichen Aufbau wie die herkömmliche Anlage 10 nach Figur 1, d.h. das Metall-Blech, also Stahl- oder Aluminiumblech mit einer Breite von 1 200 mm, wird von einer drehbaren Spule 12 abgewickelt, durch den Spalt zwischen den beiden Kaschierwalzen 24, 26 hindurchgeführt und als beschichtetes Metallblech 28 auf die Aufwickelspule 14 aufgewickelt.

Die PVC-Folie 17 wird von der Spule 22 abgewickelt und zunächst an einer Düse 32 vorbeigeführt, die einen dünnen Wasserdampffilm auf der Oberfläche der PVC-Folie 22 erzeugt. Anschließend wird mittels eines stationären Auftragkopfes 30 eine Schicht aus einem PUR-Schmelzkleber auf die mit dem Wasserdampffilm versehene Oberfläche der PVC-Folie 17 aufgebracht.

Die PVC-Folie 17 wird dann so in den Spalt zwischen den beiden Kaschierwalzen 24, 26 eingeführt, daß sich die Schicht aus dem PUR-Schmelzklebstoff zwischen der PVC-Folie 17 und dem Metallblech 16 befindet. In dem Walzenspalt herrscht eine Temperatur von etwa 50 bis 60° C, wie sie zum Ausreagieren des PUR-Schmelzklebstoffes ausreicht.

Das kaschierte Metallblech 28 wird dann auf die Spule 14 aufgewickelt.

Als Alternative zu dieser Ausführungsform ist es auch möglich, die Sprühdüse 32 nicht an dem Transportweg der PVC-Folie 17, sondern am Transportweg des Metallbleches 16, nämlich zwischen der Spule 12 und den beiden Kaschierwalzen 24, 26 anzuordnen; diese Variante ist durch die gestrichelt angedeutete Sprühdüse 32a in Figur 2 dargestellt.

Für besondere Anwendungen kann es zweckmäßig sein, mit beiden Sprühdüsen 32 und 32a gleichzeitig zu arbeiten. Und schließlich besteht auch die Möglichkeit, die Sprühdüse 32 nicht zwischen der Spule 22 und dem Auftragkopf 30, sondern zwischen dem Auftragkopf 30 und den beiden Kaschierwalzen 24, 26 anzuordnen.

Bei der dargestellten Ausführungsform weist der Auftragkopf 30 eine Breitschlitzdüse für das Aufbringen des PUR-Schmelzklebers auf die Oberfläche der PVC-Folie 17 auf. Als Alternative hierzu kann auch mit einer Walzenauftragvorrichtung gearbeitet werden.

In vielen Fällen reicht das Besprühen mit Wasserdampf für die erforderliche Temperatur von 50 bis 60° C im Bereich der beiden Kaschierwalzen 24, 26 aus. Sollte dies nicht der Fall sein, muß eine zusätzliche Heizung vorgesehen werden; zu diesem Zweck bietet sich die Beheizung der beiden Kaschierwalzen 24, 26, bspw. durch einen fluiden Wärmeträger, an.

**Ansprüche**

1. Verfahren zum Kaschieren von Metallblechen mit Folien, insbesondere mit Folien aus hochpolymeren Werkstoffen,
   a) bei dem das Metallblech und die Folie mittels eines Klebstoffes miteinander verbunden werden,
   **dadurch gekennzeichnet, daß**
   b) ein Schmelzklebstoff auf der Basis von Polyurethan verwendet wird.

2. Verfahren nach Anspruch 1, dadurch gekennzeichnet, daß der Schmelzklebstoff auf der Basis von Polyurethan auf eine Oberfläche der Folie aufgebracht wird.

3. Verfahren nach einem der Ansprüche 1 oder 2, dadurch gekennzeichnet, daß der Schmelzklebstoff auf der Basis von Polyurethan mit Wasserdampf in Berührung gebracht wird.

4. Verfahren nach einem der Ansprüche 2 oder 3, dadurch gekennzeichnet, daß der Wasserdampf auf die Oberfläche der Folie aufgesprüht wird.

5. Verfahren nach einem der Ansprüche 2 bis 4, dadurch gekennzeichnet, daß der Wasserdampf auf die Oberfläche des Metallbleches aufgesprüht wird.

6. Anlage zum Kaschieren von Metallblechen mit Folien, insbesondere mit Folien aus thermoplastischen, hochpolymeren Werkstoffen,
   a) mit mindestens einem Walzenpaar für das kontinuierliche Zusammenpressen des Metallbleches, der Folie und einer zwischen Folie und Metallblech angeordneten Klebstoffschicht,
   gekennzeichnet durch
   b) eine Vorrichtung (30) zum Auftragen einer Schicht aus einem Schmelzklebstoff auf der Basis von Polyurethan auf eine Oberfläche der Folie (17).

7. Anlage nach Anspruch 6, dadurch gekennzeichnet, daß die Auftragvorrichtung eine Breitschlitzdüse aufweist.

8. Anlage nach Anspruch 6, dadurch gekennzeichnet, daß die Auftragvorrichtung als Walzenauftragvorrichtung ausgebildet ist.

9. Anlage nach einem der Ansprüche 6 bis 8, gekennzeichnet durch eine Sprühdüse (32, 32a) für das Aufbringen von Wasserdampf.

10. Anlage nach Anspruch 9, dadurch gekennzeichnet, daß die Sprühdüse (32) Wasserdampf auf die Oberfläche der Folie (17) aufbringt.

11. Anlage nach einem der Ansprüche 6 bis 10, dadurch gekennzeichnet, daß die Sprühdüse (32) Wasserdampf auf die mit dem Schmelzkleber auf der Basis von Polyurethan versehene Oberfläche der Folie (17) aufbringt.

12. Anlage nach einem der Ansprüche 6 bis 11, dadurch gekennzeichnet, daß die Sprühdüse (32a) Wasserdampf auf die Oberfläche des Metallblechs (16) aufbringt.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 289 589 (K. HERBERTS & CO.) * Insgesamt * | 1,2,6,8 | B 32 B 7/12 |
| A | | 3-5,7,9 -12 | B 32 B 15/08 C 08 J 5/12 |
| | --- | | |
| X | DE-A-2 815 049 (HOECHST AG) * Ansprüche; Seite 5, Zeilen 1-7,15-23; Seite 6, Zeilen 24-29; Seite 7, Zeilen 1-10 * | 1,2 | |
| A | | 3-12 | |
| | --- | | |
| A | EP-A-0 031 701 (TOYO INK MANUF. CO.) * Ansprüche; Figuren; Seite 2, Zeilen 19-27 * | 1-12 | |
| | ----- | | |

RECHERCHIERTE
SACHGEBIETE (Int. Cl.4)

B 32 B
C 08 J

Der vorliegende Recherchenbericht wurde für alle Patentansprüche erstellt

| Recherchenort | Abschlußdatum der Recherche | Prüfer |
|---|---|---|
| DEN HAAG | 13-09-1988 | NILSSON |